# EUROPEAN PATENT APPLICATION

(11) **EP 2 169 916 A1**
(43) Date of publication of application: **31.03.2010**
(21) Application number: 08105419.9
(22) Date of filing: 24.09.2008
(51) Int. Cl.: H04L 29/12

(54) **Method and device for data processing in a network component and communication system comprising such device**

(71) Applicant: Nokia Siemens Networks OY, 02610 Espoo (FI)
(72) Inventor: Armbruster, Friedrich, 81379, München (DE); Hong, Jie, 100029, Beijing (CN); Treyer, Thomas, 81379, München (DE); Xiao, Yan, Beijing (CN); Zhang, Yinguang, 100016, Beijing (CN)
(74) Representative: Bruglachner, Thomas E.

(57) **Abstract**

A method and a device for data processing in a network component are provided, wherein an IP address is mapped to at least one port associated with a subscriber. Furthermore, a communication system is suggested comprising said device.

## Description

The invention relates to a method and to a device for data processing in a network component and to a communication system comprising such a device.

Global public IPv4 addresses obtained from an IANA free pool are going to run out faster than expected. Actual forecasts predict that an exhaustion of such IPv4 addresses may yet be reached in 2010.

The problem of running short of IP addresses could be solved by a network address translation mechanism (NAT) as known in the art. A carrier NAT merges traffic from multiple subscribers into a single public IP address. This allows using a single IPv4 address for several subscribers. Utilizing such approach, e.g., up to 100 subscribers can be served via a single global IPv4 address.

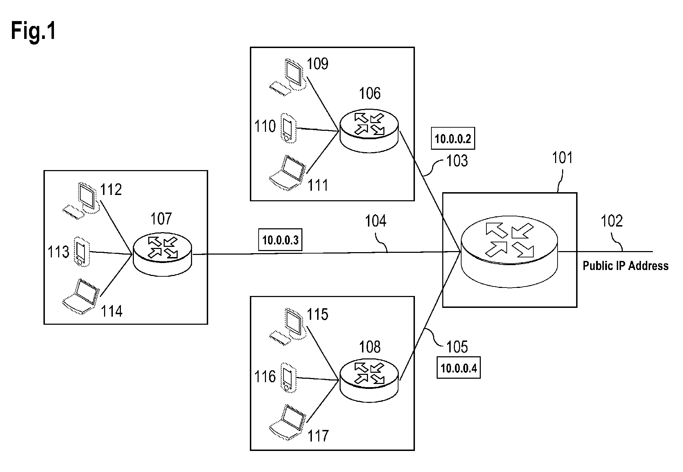

**Fig.1** shows a diagram comprising components of a network to visualize the NAT approach known in the art.

A carrier NAT device 101 is connected via a line 102 to a core network (not shown). The NAT device 101 is addressed by the core network via a public IP address. The NAT device 101 is further connected via a line 103 to a home router 106 at a first subscriber's home. The home router 106 is further connected to several devices 109 to 111 (PC, PDA, laptop) within the first subscriber's home. The NAT device 101 is further connected via a line 104 to a home router 107 at a second subscriber's home. The home router 107 is further connected to several devices 112 to 114 (PC, PDA, laptop) within the second subscriber's home. The NAT device 101 is further connected via a line 105 to a home router 108 at a third subscriber's home. The home router 108 is further connected to several devices 115 to 117 (PC, PDA, laptop) within the third subscriber's home.

The single public IPv4 address is translated by the carrier NAT device 101 to multiple subscribers, i.e. to the first to third subscribers shown in Fig.1. Each subscriber obtains a private IP address 10.0.0.2 to 10.0.0.4 from the carrier NAT device 101. Furthermore, each subscriber has several devices 109 to 117 and each home router 106 to 108 provides an encapsulated NAT functionality, translating the 10.0.0.x address supplied by the carrier NAT device 101 into a 192.168.1.x address.

Hence, two NAT routers are required to supply data from the backbone network to the device and vice versa.

Although each home router may be a piece of low-cost equipment providing NAT, the NAT within the carrier's sphere (e.g., the carrier NAT device 101 in Fig.1) is a much more critical component. The NAT functionality described is an additional functionality provided by a carrier's server farm leading to a significant load which results in decreased processing time of user traffic and/or more expensive components to be deployed with the server farm to cope with said NAT. For example, if a server farm handles 100,000 subscribers with an average traffic volume of 2 Mbit/s for each subscriber, the traffic throughput for the server farm would amount to be 2times 200 Gbit/s for said 100,000 subscribers. Providing NAT for each subscriber would significantly add to the processing performance of the server farm.

The **problem** to be solved is to overcome the disadvantages as described above and in particular to provide an efficient way to cope with a limited number of (IP) addresses when conveying traffic to and from a large number of subscribers.

This problem is solved according to the features of the independent claims. Further embodiments result from the depending claims.

In order to overcome this problem, a method is provided for data processing in a network component, wherein an IP address is mapped to at least one port associated with a subscriber.

Such mapping at the network component allows to merely forward the IP address and thus efficiently avoid complex and time consuming NAT processing for all traffic passing this network component.

It is noted that said port may comprise a physical port of the network component and/or a logical port. The logical port information may be at least one TCP/UDP port, it may in particular comprise or be associated with a range of ports.

Furthermore, the subscriber may be a home router or any instance that is functionally operable with an IP address. In this sense, the subscriber may also be a component or entity like a line card, e.g., of or for a media gateway. Each line card may be connected to at least one VoIP processing unit, e.g., a VoIP telephone. The network component as well as the subscriber(s) may be arranged to process VoIP traffic, in particular conveyed via a real-time protocol (RTP).

According to an embodiment, a MAC address of the subscriber is mapped to said IP address.

The mapping of said MAC address of the subscriber and at least one port associated with the subscriber to the IP address can be done in both ways, i.e. in upstream direction and/or in downstream direction.

Preferably, the information required for upstream and/or downstream mapping can be at least temporarily stored at the network component. For example, a data entry in a database or table may reference subscriber-relevant information, e.g., its MAC address and/or logical port information and/or physical port information and/or IP address.

In an embodiment, at least one TCP/UDP port number is associated with the subscriber and with a physical port to which the subscriber is connected to the network component.

Hence, the combination of logical port, e.g., TCP/UDP port information, and physical port allows the network component determining which data packet needs to be forwarded to which subscriber.

Preferably, each subscriber is assigned a pool of TCP/UDP ports of the network component. Advantageously, one subscriber is connected to a single physical port of the network component.

In particular, the subscribers are assigned non-overlapping TCP/UDP port ranges. For such TCP/UDP ports no address translation is required by the network component.

In another embodiment, several subscribers connected to the network component share the same IP address.

In particular, a group of subscribers may be provided with the same IP address by the network component.

In a further embodiment, the network component provides this IP address towards the subscribers.

Hence, the network component may act as a server (e.g., a DHCP server) supplying the same IP address to (a group of) subscribers. In particular, each subscriber is connected to a single physical port of the network component.

In a next embodiment, the network component is connected to a network, in particular to the Internet or to an edge router of the Internet.

It is also an embodiment that the network component processes and responds to ARP requests from the network.

Hence, the network component may shield each subscriber from ARP requests and provide responses to such requests by itself.

Pursuant to another embodiment, said IP address is an IPv4 address, which is in particular assigned to the network component.

According to an embodiment, said IP address is provided from a network or from a carrier or from an operator, in particular from a DHCP server of the network.

According to another embodiment, the network component processes VoIP data provided in particular via a RTP.

In yet another embodiment, said network component comprises or is associated with an access node, a media gateway, a switching unit, a DSLAM or a PON OLT.

The problem stated above is also solved by a device comprising a and/or being associated with a processor unit and/or a hard-wired circuit and/or a logic device that is arranged such that the method as described herein is executable on said processor unit.

According to a further embodiment, a MAC address of a subscriber is mapped to a MAC address of the network component.

According to an embodiment, said device is a communication device or a network component, in particular a or being associated with an access node, a media gateway, a switching unit, a DSLAM or a PON OLT.

According to an embodiment, the device is arranged to perform IP address mapping and/or processing of ARP requests.

The problem stated supra is further solved by a communication system comprising the device as described herein.

Embodiments of the invention are shown and illustrated in the following figures:
- Fig.2: shows an Access Node (AN) that is connected via a line to the Internet, in particular to an edge router of the Internet (or of the carrier) and via several lines to several home routers, wherein the public IP address provided by the Internet is also used towards the home routers;
- Fig.3: shows a diagram comprising a network scenario with a multi-LIU based media gateway;
- Fig.4: shows a block diagram of an exemplary H.248.1 connection model;
- Fig.5: shows a block diagram of a gateway providing down-stream packet forward based on a UDP port with a single IP address for several LIU cards;
- Fig.6: shows a block diagram of a gateway resolving ARP requests within a central switching unit.

The approach provided in particular suggests a port translation and a MAC translation. Both such function may be supplied with an Access Node like a DSLAM or a G(E)PON OLT.

Preferably, subscribers that are connected to the same Access Node (AN) may use the same public IPv4 address, which is processed by network address translation (NAT) at the home routers. Modifications may be provided to port ranges of the AN, to multicast traffic distribution and to DHCP address assignment.

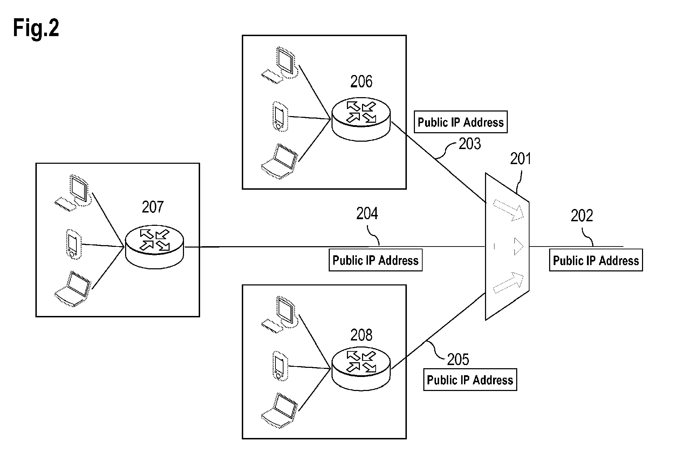

**Fig.2** shows an Access Node (AN) 201 that is connected via a line 202 to the Internet, in particular to an edge router of the Internet (or of the carrier).

In downstream direction (i.e. towards the subscribers), the AN 201 is connected via lines 203, 204 and 205 to three different home routers 206 to 208. Each home router 206 to 208 provides NAT functionality as described above and supplies several devices attaches to the particular home routers 206 to 208 (see also Fig.1 with regard to the home routers and the attached devices).

The carrier provides a public IP address to the AN 201 which also conveys the same IP address towards the home routers 206 to 208. The AN 201 does not require to provide any NAT functionality thereby significantly reducing the processing load at the AN 201.

### Modification to DHCP

After booting, the Access Node acts as a DHCP client and requests a public IP address from "the Internet", e.g., from the carrier's DHCP server. Alternatively, a static IP address may be configured for this Access Node.

Whenever a subscriber asks via DHCP for an IP address, this DHCP traffic is terminated by the AN, i.e. the AN acts as a DHCP server towards the subscriber. The AN conveys the same public IP address to the subscriber as the AN has received from "the Internet". Preferably, other DHCP parameters like DNS-entries, SIP-gateways, etc. are copied from the DHCP information provided to the AN.

### Port Translation

The port numbers used by TCP and UDP traffic are translated by the AN. The home router may select any port number, and the Access Node translates these subscriber-selected port numbers into a specific range of port numbers. For every subscriber there may be provided a pool of port numbers with the AN.

The complete range of TCP/UDP port numbers is 64k, and the AN divides this range by the number of subscribers. For example, if the AN may supply up to 100 subscribers, the pool of port numbers per subscriber may amount to a size of ca. 640.

A combination of IP-address, protocol and port number may be used to uniquely identify a specific subscriber.

### Translation Table Aging

The AN may comprise a translation table providing the subscriber, port numbers and in particular a protocol used. Every time a record of the translation table is used, a counter can be reset. Hence, the value of such counter indicates as how long a particular entry of the table has (not) been used. This may be utilized for port translation aging strategies similar to MAC address aging used by Ethernet bridges.

### MAC Address Translation

A source MAC address of the subscriber typically corresponds to a MAC address of the subscriber's home router. This source MAC address is translated in upstream direction into an MAC address of the AN. In downstream direction, the port number of the TCP or UDP protocol is used to identify the subscriber and to allow the MAC address translation of the destination MAC address from the Access Node MAC address to the subscriber's MAC address.

As a result, an IP edge router in the core network sees a single MAC address for all traffic from all subscribers hidden by or connected with a particular Access Node.

### Forwarding in Upstream Direction

A source port number is analyzed by the AN. If the AN has a translation entry for this port number (i.e. a subscriber is registered with the AN for such port), the translation of the source port number and of the source MAC address is processed and the traffic is forwarded towards the Internet, e.g., towards the edge router.

If there is no such entry in the port translation table of the AN, a new entry may be created for the translation table of the AN. The translation of the source port number and of the source MAC address is processed and the traffic is forwarded towards the edge router.

### Forwarding in Downstream Direction

Upon receiving traffic from the edge router (i.e. from the Internet), the destination port number is analyzed by the AN. The AN derives from the port number the corresponding pool of port numbers and from the pool the subscriber, in particular the subscriber's MAC address and the physical port at the AN's line card. This can be done even if there is no entry in the subscriber's port translation table.

The MAC destination address and the destination port number is translated and the packet is forwarded to the subscriber.

### Modification to IGMP

In a particular scenario, an IGMP proxy agent may be up and running. The proxy agent terminates all IGMP traffic from the subscribers and distributes the requested multicast groups to the subscribers.

In such a scenario, IGMP traffic may be forwarded across the Access Node without any need for address translation.

### Implementation and further Advantages

The approach provided does not require processing carrier NAT functionality for the carrier's server farm.

It is also an advantage that the use of the AN ports by the subscribers is predictable. The pool of port number is fixed and assigned per subscriber during startup of the AN. Hence, the AN is able to determine which subscriber uses the public IP address by determining the port number, in particular the physical port used by the subscriber.

### Further Embodiment: Processing VoIP via a media gateway

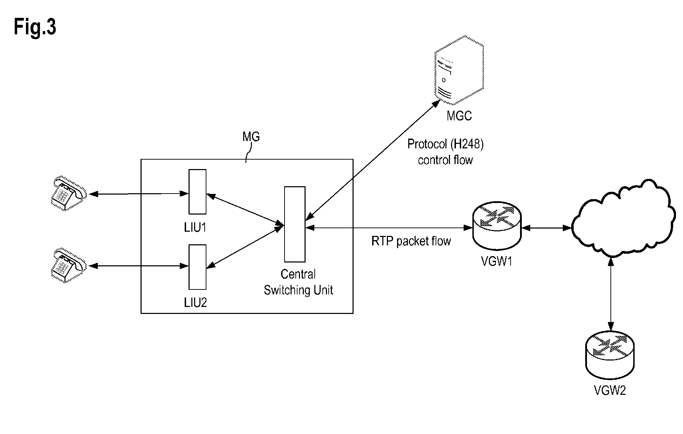

**Fig.3** shows an infrastructure of a multi-LIU based media gateway (MG). The MG may be a DSLAM comprising a central switching unit and several LIUs. An analog voice signal is translated into VoIP RTP packets within each LIU. The VoIP RTP packets are conveyed to a virtual gateway (VGW) via an L2 and/or an L3 protocol.

Each LIU may be regarded as subscriber according to the example described above.

Each LIU card configures IP and MAC addresses for analog signal to IP packet translation. The pair of IP and MAC addresses configured for different LIU cards is different since the central switching unit forwards packets based on IP or MAC address. Such an infrastructure, however, has the following draw-backs:
(a) Every LIU card may require a single IP address. As the MG may comprise several LIU cards, a single MG requires several IP addresses. As indicated above, due to the lack of IPv4 addresses, such approach may be problematic.
(b) A Gateway Control Protocol is known as Megaco (IETF designation) or H.248 (ITU designation) and it is preferably used between a Media Gateway and a Media Gateway Controller in a network. It defines control mechanisms to allow a Media Gateway Controller to control gateways in order to support multimedia streams across networks. It is typically used to provide VoIP functionality (including voice/fax calls) between PSTN-IP or IP-IP networks.

In a multi IP address framework, each LIU card of the MG has a different IP address for transmitting an RTP stream. When a call connection is established, the MG selects an IP address for an ephemeral termination that is associated with a physical termination (a physical port of the subscriber line) to transmit the RTP stream.

The MG may know the position (or slot number) of the physical termination to decide about the actual IP address.

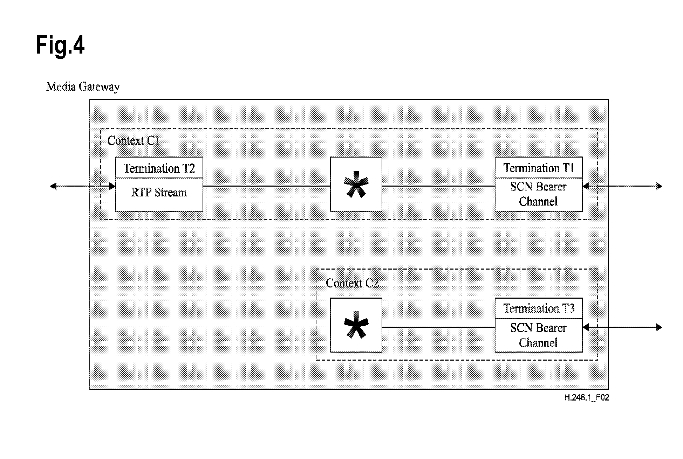

**Fig.4** shows an example of a H248.1 connection. A physical termination (SCN Bearer Channel) and an ephemeral termination (RTP stream) are associated within a C1 context.

With multi IP addresses, the MG may sometimes not be aware of the position of a specific physical termination. When the MG initiates a call establishment, there may be two limitations for multi IP addressing schemes:

Firstly, in order to support an ADD command according or similar to H.248, a media gateway controller (MGC) may add only an ephemeral termination to a new context. According to H.248, the MG may reply with media information comprising an IP address and a port number. For selecting an IP address by the multi IP addressing scheme, the MG preferably is aware of a subscriber line's position. However, the MG may not yet receive or be provided with any information regarding the physical port. Thus, the MG cannot select a proper IP address for such a call connection.

Secondly, in order to support a MOVE command according or similar to H.248, the MGC may move a physical termination to a context that already has an ephemeral termination or the MGC may move an ephemeral termination to a context that already has a physical termination. Since the ephemeral termination has already been associated with an IP address, this IP address may not match the position of the physical termination moved.

The approach provided also suggests using one IP address and one MAC address in a distributed system, in particular comprising a media gateway (MG).

The MG processing a H.248 protocol thus becomes more flexible. For example, an interworking ability with a MGC and other network elements can be significantly improved.

In particular, VoIP RTP packets from the MG may comprise only one IP address even in case the MG has several LIU cards. Hence, each LIU of the MG card may be set to the same IP and MAC addresses. In particular a group of LIU cards may be set to the same IP and MAC addresses.

With each LIU card being assigned to the same IP and MAC addresses, a central switching unit of the GW is not aware as how to forward RTP packets to the proper LIU card based on the L2 and/or L3 protocol(s).

With the UDP port used in VoIP RTP packets from different LIU cards being different, VoIP RTP packets can be forwarded to the corresponding LIU cards based on UDP port rather than based on L2 and/or L3 address.

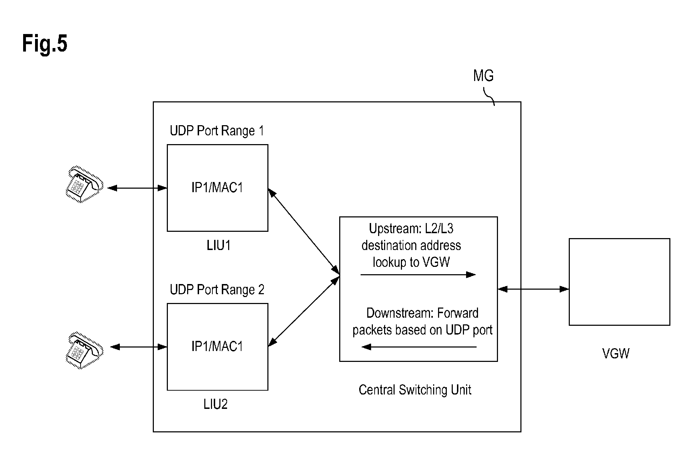

**Fig.5** shows a block diagram of a media gateway MG comprising a LIU1 to which a first UDP port range is assigned and a LIU2 to which a second UDP port range is assigned. Each LIU card is connected to a central switching unit of the MG. Each LIU card further is connected to a subscriber and the central switching unit is connected to a virtual gateway VGW. Fig.5 shows how VoIP RTP packets can be forwarded in downstream direction utilizing a single IP address for all LIU cards. In upstream direction, L2/L3 address lookup is processed at the central switching unit for forwarding data towards the VGW and thus, e.g., the Internet.

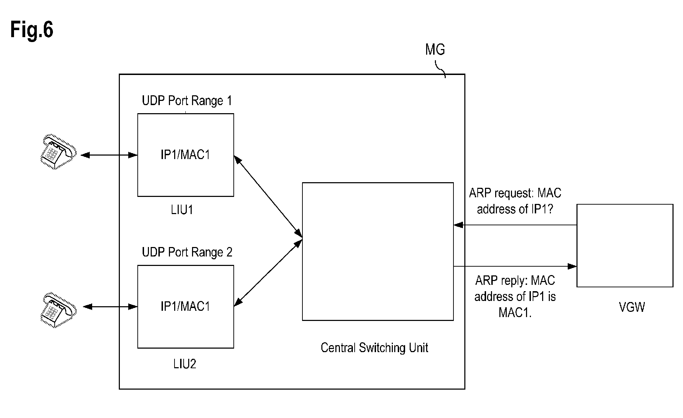

Since all the LIU cards of the GW are configured with the same IP and MAC addresses, ARP requests may preferably not be answered by the LIU cards. Thus, the central switching unit may process ARP requests instead of the LIU cards. **Fig.6** shows a block diagram according to Fig.5, wherein the central switching unit receives an ARP request asking, e.g., for a MAC address associated with an IP address IP1. This request may not be forwarded to the LIU cards, but instead be answered by the central switching unit providing the information "MAC address associated with IP1 is MAC1".

### List of Abbreviations:

- ARP: Address Resolution Protocol
- DHCP: Dynamic Host Configuration Protocol
- DSLAM: Digital Subscriber Line Access Multiplexer
- IGMP: Internet Group Management Protocol
- IP: Internet Protocol
- IPv4: Internet Protocol Version 4
- L2: Layer-2
- L3: Layer-3
- LIU: Line Interface Unit
- MAC: Media Access Control
- MG: Media Gateway
- MGC: Media Gateway Controller
- NAT: Network Address Translation
- NAT: Network address translation
- OLT: Optical Line Termination
- PON: Passive Optical Network
- RTP: Real-Time Transport Protocol
- SIP: Session Initiation Protocol
- TCP: Transfer control protocol
- UDP: User datagram protocol
- VGW: Virtual Gateway
- VoIP: Voice over IP

## Claims

1. A method for data processing in a network component, wherein an IP address is mapped to at least one port associated with a subscriber.

2. The method according to claim 1, wherein a MAC address of the subscriber is mapped to said IP address.

3. The method according to any of the preceding claims, wherein at least one TCP/UDP port number is associated with the subscriber and with a physical port to which the subscriber is connected to the network component.

4. The method according to any of the preceding claims, wherein several subscribers connected to the network component share the same IP address.

5. The method according to claim 4, wherein the network component provides this IP address towards the subscribers.

6. The method according to any of the preceding claims, wherein the network component is connected to a network, in particular to the Internet or to an edge router of the Internet.

7. The method according to claim 6, wherein the network component processes and responds to ARP requests from the network.

8. The method according to any of claims 6 or 7, wherein said IP address is an IPv4 address, which is in particular assigned to the network component.

9. The method according to any of claims 6 to 8, wherein said IP address is provided from a network or from a carrier or from an operator, in particular from a DHCP server of the network.

10. The method according to any of the preceding claims, wherein the network component processes VoIP data.

11. The method according to any of the preceding claims, wherein a MAC address of a subscriber is mapped to a MAC address of the network component.

12. The method according to any of the preceding claims, wherein said network component comprises or is associated with an access node, a media gateway, a switching unit, a DSLAM or a PON OLT.

13. A device comprising a and/or being associated with a processor unit and/or a hard-wired circuit and/or a logic device that is arranged such that the method according to any of the preceding claims is executable thereon.

14. The device according to claim 13, wherein said device is a communication device or a network component, in particular a or being associated with an access node, a media gateway, a switching unit, a DSLAM or a PON OLT.

15. The device according to claim 13 or 14, arranged to perform IP address mapping and/or processing of ARP requests.

16. Communication system comprising the device according to any of claims 13 to 15.
